# EUROPEAN PATENT APPLICATION

(11) **EP 2 405 329 A1**
(43) Date of publication of application: **11.01.2012**
(21) Application number: 11166313.4
(22) Date of filing: 17.05.2011
(51) Int. Cl.: G06F 3/041, G06F 3/048

(54) **Input control method and electronic device for a software keyboard**

(30) Priority: 08.07.2010 TW 99122430
(71) Applicant: Acer Incorporated, Hsichih, Taipei Hsien 221 (TW)
(72) Inventor: Lin, Shao-Chieh, 221, Taipei (TW); LIN, Chih-Hsiang, 221, Taipei (TW); Dai, Han-Yu, 221, Taipei (TW)
(74) Representative: Michalski, Stefan

(57) **Abstract**

An input control method for an electronic device comprising a multi-touch screen, comprising: displaying a software keyboard on a multi-touch screen; receiving and recording first touch information corresponding to a first touch event on the software keyboard; receiving and recording second touch information corresponding to a second touch event on the software keyboard; calculating a first touch area corresponding to the first touch event according to the touch range information of the first touch information; calculating a second touch area corresponding to the second touch event according to the touch range information of the second touch information; determining whether the first touch event is a finger-touch event or a non-finger-touch event according to the touch area; skipping the first touch event if the first touch event is a non-finger-touch event, and not generating a key code input; calculating a distance between the first and second touch areas according to the first and second touch position information if the first touch event is a finger-touch event; skipping the first touch event and not generating the key code input if the distance between the first and second touch areas is shorter than or equal to a predetermined distance; and generating the key code input if the distance between the first and second touch areas is longer than the predetermined distance.

## Description

### CROSS REFERENCE TO RELATED APPLICATIONS

This Application claims priority of Taiwan Patent Application No. 099122430, filed on July 8, 2010, the entirety of which is incorporated by reference herein.

### BACKGROUND OF THE INVENTION

### Field of the Invention

The disclosure generally relates a software keyboard on a multi-touch screen, and more particularly to a software keyboard on a multi-touch screen eliminating non-input touches.

### Description of the Related Art

Some portable electronic devices, e.g., mobile phones, have touch screens. Keyboard functions may be carried out on touch screens by software e.g., software keyboards. The current software keyboard input method is usually by a single finger or two fingers. However, a keyboard of a PC is often input by using ten fingers. Also, users may sometimes put their palms and wrists on the top of a notebook or a desk. In order to develop a software keyboard that is similar to a solid keyboard of a PC, the differences thereof should be resolved.

Currently, most touch screens can eliminate quick touch inputs by a user. Specifically, a key code is input after it is determined that a user's finger is far from a touch screen (touch up). However, the method does not resolve problems of non-input touches, e.g., users may put their palms on a touch screen. A software keyboard that can be used by more than two fingers, while eliminating non-input touches is provided by the invention.

### BRIEF SUMMARY OF THE INVENTION

In one exemplary embodiment, the present disclosure is directed to an input control method for a software keyboard and an electronic device comprising a multi-touch screen, comprising: displaying the software keyboard on the multi-touch screen; receiving and recording first touch information corresponding to a first touch event on the software keyboard, wherein the first touch information comprises first touch position information, first touch time information, and first touch range information during the time period from the beginning, and touch down, to the end, and touch up, of the first touch event; receiving and recording second touch information corresponding to a second touch event on the software keyboard, wherein the second touch information comprises second touch position information, second touch time information, and second touch range information during the time period from the beginning, and touch down, to the end, and touch up, of the second touch event; calculating a first touch area corresponding to the first touch event according to the touch range information of the first touch information; calculating a second touch area corresponding to the second touch event according to the touch range information of the second touch information; determining whether the first touch event is a finger-touch event or a non-finger-touch event according to the touch area; skipping the first touch event if the first touch event is a non-finger-touch event, and not generating a key code input; calculating a distance between the first and second touch areas according to the first and second touch position information if the first touch event is a finger-touch event; skipping the first touch event if the distance between the first and second touch areas is shorter than or equal to a predetermined distance, and not generating the key code input; and generating the key code input if the distance between the first and second touch areas is longer than the predetermined distance.

In another exemplary embodiment, the present disclosure is directed to an electronic device for a software keyboard, comprising: a multi-touch screen, having a display area to display the software keyboard; a processor, configured to: receive and record first touch information corresponding to a first touch event on the software keyboard, wherein the first touch information comprises first touch position information, first touch time information, and first touch range information during the time period from the beginning, and touch down, to the end, and touch up, of the first touch event; receive and record second touch information corresponding to a second touch event on the software keyboard, wherein the second touch information comprises second touch position information, second touch time information, and second touch range information during the time period from the beginning, and touch down, to the end, and touch up, of the second touch event; calculate a first touch area corresponding to the first touch event according to the touch range information of the first touch information; calculate a second touch area corresponding to the second touch event according to the touch range information of the second touch information; determine whether the first touch event is a finger-touch event or a non-finger-touch event according to the touch area; skip the first touch event if the first touch event is a non-finger-touch event, and not generating a key code input; calculate a distance between the first and second touch areas according to the first and second touch position information if the first touch event is a finger-touch event; skip the first touch event if the distance between the first and second touch areas is shorter than or equal to a predetermined distance, and not generating the key code input; and generate the key code input if the distance between the first and second touch areas is longer than the predetermined distance.

### BRIEF DESCRIPTION OF DRAWINGS

The invention can be more fully understood by reading the subsequent detailed description and examples with references made to the accompanying drawings, wherein:

FIG. 1 is a diagram illustrating an electronic device according to an embodiment of the invention;

FIG. 2 is a diagram of a software keyboard on a touch screen according to an embodiment of the invention;

FIG. 3A is a flowchart illustrating an input control method for a software keyboard according to an embodiment of the invention;

FIG. 3B is a flowchart illustrating an input control method for a software keyboard according to an embodiment of the invention;

FIG. 4 is a diagram illustrating first and second touch areas corresponding to first and second touch events, respectively, in FIG. 3A and FIG. 3B at a recording time according to an embodiment of the invention;

FIG. 5 is a diagram illustrating touch events of software keyboard on a touch screen at another recording time according to an embodiment of the invention.

### DETAILED DESCRIPTION OF THE INVENTION

In the disclosure, allocation of each component in embodiments is for illustration, not limitation. Schematic labels in some embodiments partly repeat in order to simplify, but do not mean relation between different embodiments.

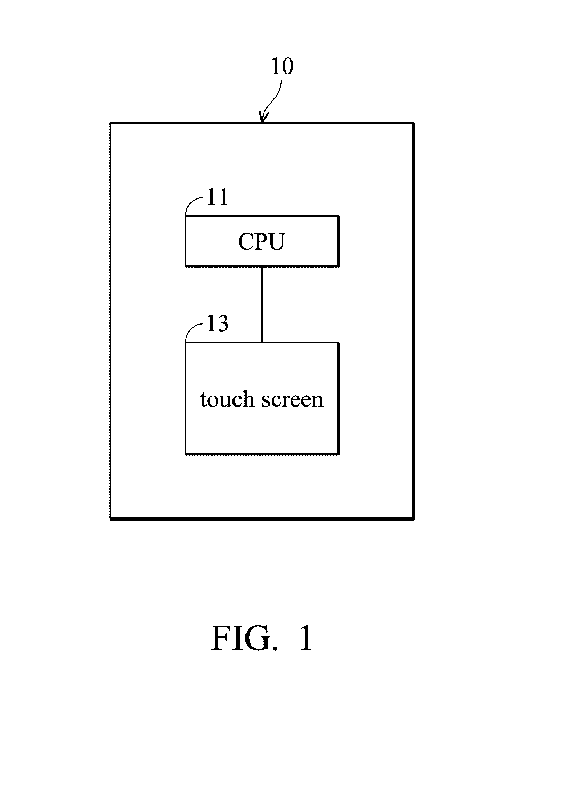

FIG. 1 is a diagram illustrating an electronic device 10 according to an embodiment of the invention. The electronic device 10 may be a notebook, a tablet PC, or any electronic device comprising a touch screen. The electronic device 10 has a touch screen, and displays a software keyboard on the touch screen by software simulation. The electronic device 10 comprises a central processing unit (CPU) 11 and a touch screen 13. The touch screen 13 may be a multi-touch screen, and comprise a multi-touch enabled display surface. A user can input instructions and information by the touch screen 13. The CPU 11 controls the touch screen 13 and the whole electronic device 10 according to the input instructions and information from the touch screen 13.

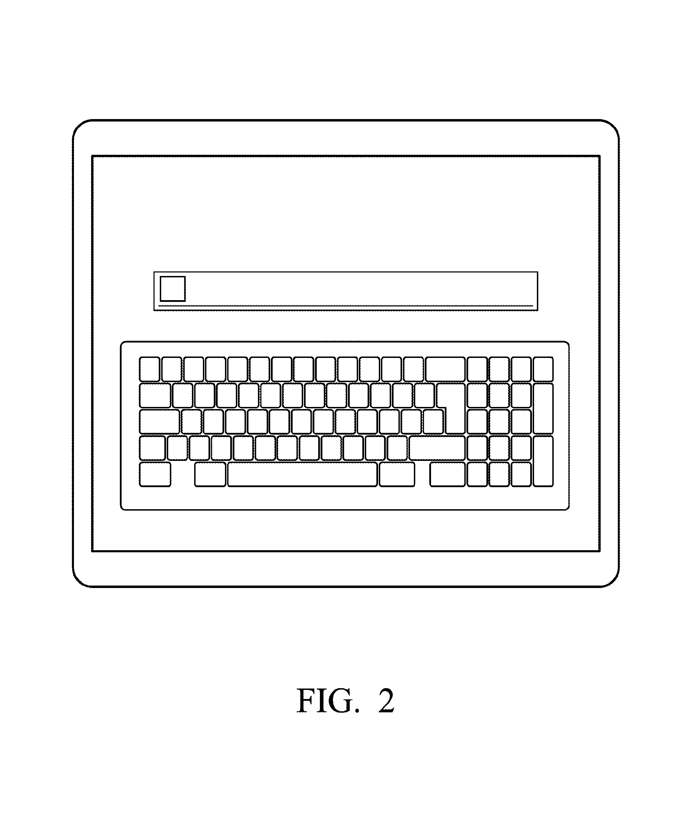

FIG. 2 is a diagram of a software keyboard on the touch screen 13 according to an embodiment of the invention. The multi-touch enabled display surface of the touch screen 13 may display the software keyboard that is input by touch. A user can use ten fingers to input information like characters to the electronic device 10, like inputting information by a solid keyboard.

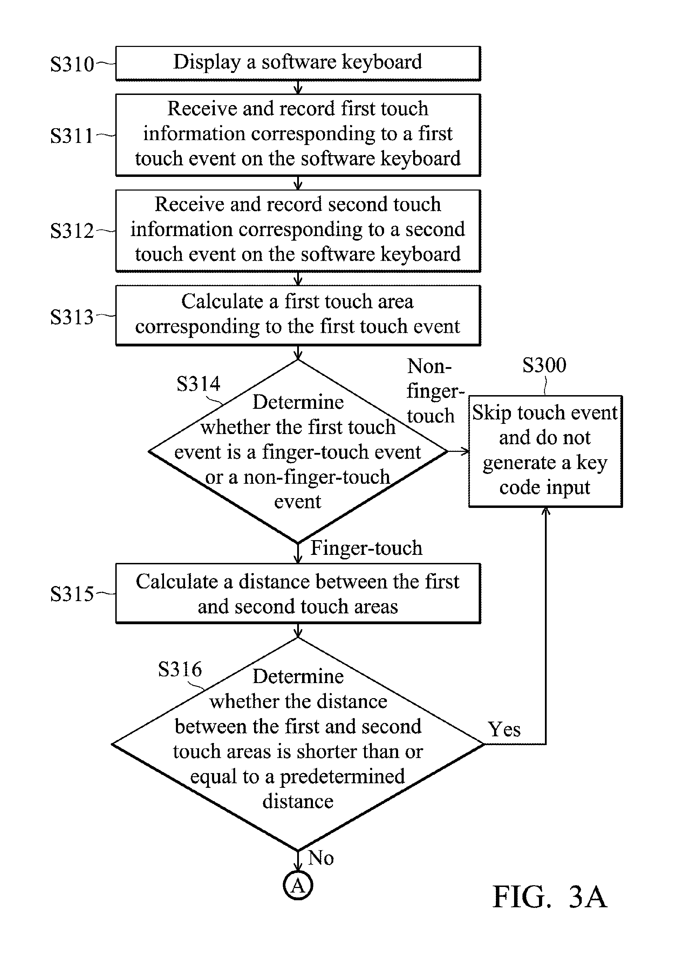

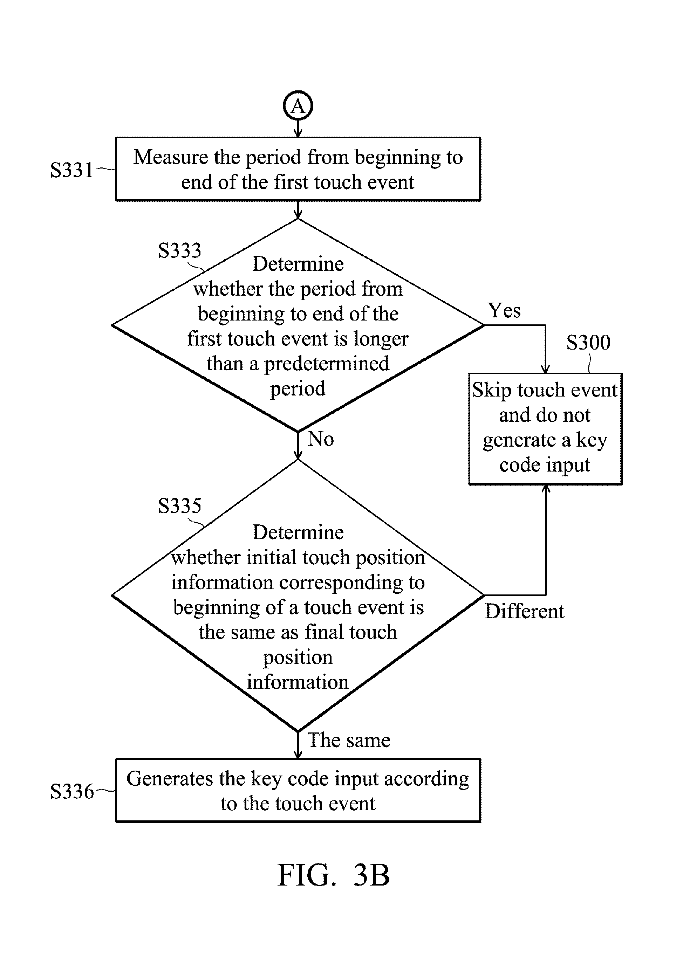

FIG. 3A and 3B are a flowchart illustrating an input control method for a software keyboard according to an embodiment of the invention. The input control method in FIG. 3A and 3B can be implemented in the electronic device 10 of FIG. 1, wherein the style of the software keyboard may vary, as is not limited to the style in FIG. 2. In step S310, a touch screen of an electronic device displays a software keyboard (as shown in FIG. 2). In step S311, the electronic device is configured to receive and record first touch information corresponding to a first touch event on the software keyboard, wherein the first touch information comprises first touch position information, first touch time information, and first touch range information during the time period from the beginning (touch down) to the ending (touch up) of the first touch event. In step S312, the electronic device is configured to receive and record second touch information corresponding to a second touch event on the software keyboard, wherein the second touch information comprises second touch position information, second touch time information, and second touch range information during the time period from the beginning to the ending of the second touch event. In the embodiments of the disclosure, "beginning of a touch event" means the moment at which a user touches a multi-touch screen by a finger or a palm of a hand and "end of a touch event" means the moment at which a user's finger or palm leaves the multi-touch screen (touch up). In other words, when a user touches a touch screen by a finger, e.g., forefinger, (beginning of a touch event) but does not let the finger move away from the touch screen (end of a touch event), the electronic device is configured to record touch position information, and save the recording time as touch time information periodically in intervals, for a predetermined time. The first and second touch information comprise a touch position, and touch time, and a touch range recorded at each recording time during the time period from the beginning to the ending of the first and second touch event, respectively.

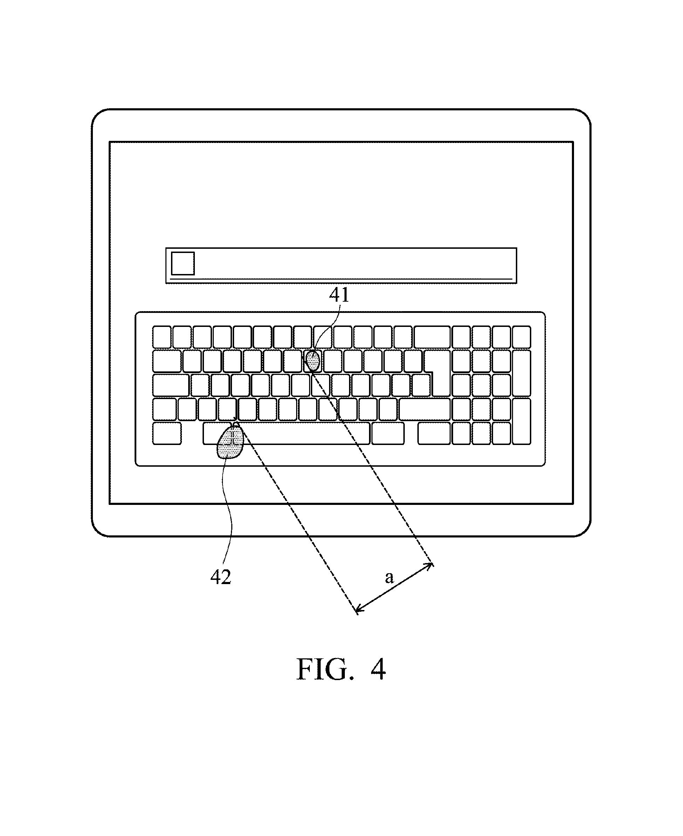

FIG. 4 is a diagram illustrating first and second touch areas and touch positions corresponding to first and second touch events, respectively, in FIG. 3A and FIG. 3B at a recording time (first recording time) according to an embodiment of the invention. At the first recording time, a first touch area 41 corresponding to the first touch event and a second touch area 42 corresponding to the second touch event are recorded.

In step S313, the electronic device is configured to calculate a first touch area corresponding to the first touch event according to the touch range information of the first touch information. Then, the electronic device can be further configured to calculate a second touch area corresponding to the second touch event according to the touch range information of the second touch information. In step S314, it is determined whether the first touch event is a finger-touch event or a non-finger-touch event according to the touch area. In step S300 (S314, non-finger-touch), the electronic device skips the first touch event and does not generate a key code input. For example, the area size standard may be preset, and touch events can be categorized as non-touch events, finger-touch events, and palm-touch events according to touch areas (from small to large), wherein the non-touch events and palm-touch events are both categorized as non-finger-touch events. The finger-touch event comprises a thumb-touch event and a non-thumb-touch event, and a thumb-touch area corresponding to the thumb-touch event is larger than a non-thumb-touch area corresponding to the non-thumb-touch event.

In steps S313 and S314, the finger-touch event (touched by a thumb or other fingers) is chosen, and the palm-touch event (e.g., touch area is too large) and the non-touch event (e.g., touch area is too small) are skipped. Therefore, it can be determined that a touch event is not an input for a keyboard (touch down) when the electronic device determines that a too large or too small touch area has been touched. When users use a software keyboard for input, they may put a part of their palm near their wrist, their wrist, or a side of their palm on a touch screen. Thus, a too large touch area is determined. On the other hand, users may slightly touch the surface of a touch screen due to moving, or detection by a detector. Thus, a too small touch area is determined. Because neither cases may be deemed as a normal input by a user, both may be required to be ignored.

In step S315 (S314, finger-touch), the electronic device is configured to calculate a distance between the first touch area 41 and the second touch area 42 according to the first and second touch position information. For example, the distance between the first touch area 41 and the second touch area 42 is the shortest distance between the edge of the first touch area 41 and the edge of the second touch area 42, such as the distance "a" in FIG. 4.

In step S316, it is determined whether the distance between the first touch area 41 and the second touch area 42 is shorter than or equal to a predetermined distance. The electronic device skips the first touch event and does not generate the key code input (S315, Yes, to S300) if the distance between the first and second touch areas is shorter than or equal to the predetermined distance. The electronic device is configured to perform the procedure A (S315, No) if the distance is longer than the predetermined distance, and further process the first touch information corresponding to the first touch event.

Referring to FIG. 3B, in step S331, the electronic device is configured to start a timer to measure the time period from the beginning to the ending of the first touch event if the first touch event is a finger-touch event and the distance between the first and second touch areas is longer than the predetermined distance. In step S333, it is determined whether the time period from the beginning to the ending of the first touch event is longer than a predetermined time period. The electronic device skips the first touch event and does not generate the key code input (S333, Yes, to S300) if the time period from the beginning to the ending of the first touch event is longer than the predetermined time period. Namely, it is determined that users may have just put their fingers on a keyboard to rest if a touch event has continued for a predetermined time period. Proceed to S335 (S333, No) if the time period from the beginning to the ending of the first touch event is shorter than or equal to the predetermined time period. In step S335, it is determined whether the initial touch position information corresponding to the beginning of the first touch event is the same as the final touch position information corresponding to the ending of the first touch event if the first touch event is a finger-touch event and the distance between the first and second touch areas is longer than the predetermined distance. The electronic device skips the first touch event and does not generate the key code input (S335, different, to S300) if the initial touch position information corresponding to the beginning of the first touch event is different from the final touch position information corresponding to the ending of the first touch event. In step S336 (S335, the same), the electronic device generates the key code input if the initial touch position information corresponding to the beginning of the first touch event is the same as the final touch position information corresponding to the ending of the first touch event. In S335, determining whether the initial touch position information corresponding to the beginning of the first touch event is the same as the final touch position information corresponding to the ending of the first touch event is further according to whether the initial and final touch position information points correspond to the same key of the software keyboard on the multi-touch screen.

For the second touch information of the second touch event, the above steps, S313-S316, and S331-S335 are also performed to determine whether to generate a key code input according to the second touch event. In steps S313 and S314 of the embodiment, the electronic device is configured to calculate the second touch area 42 corresponding to the second touch event, and then categorize the second touch event as a palm-touch event, i.e., a non-finger-touch event, according to the second touch area 42. Therefore, the step S300 is performed to skip the second touch event and not generate a key code input. If a new touch event occurs, the above steps are also performed to compare the new touch event with the original touch area.

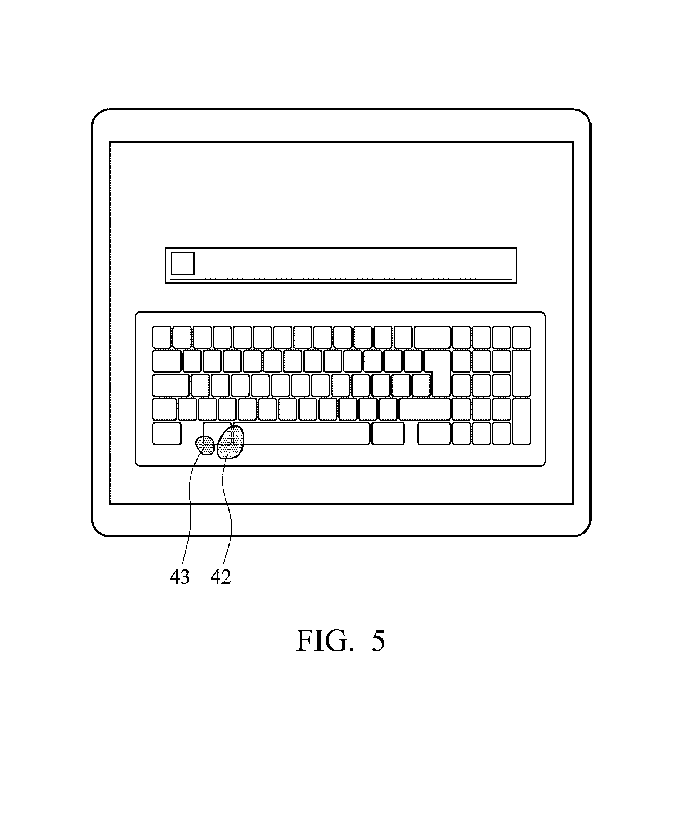

FIG. 5 is a diagram illustrating touch events of software keyboard on a touch screen at another recording time (referring to as second recording time) according to an embodiment of the invention. At the second recording time, the first touch event is finished (a user's fingers leave from a touch screen), but the second touch event continues (a user still has a part of his/her left palm on the touch screen). Furthermore, the touch screen receives a third touch event. As shown in FIG. 5, at the second recording time, the second touch area 42 and a third touch area 43 corresponding to the second touch event and the third touch event, respectively, are recorded. For the third touch information of the third touch event, the above steps, S313-S316, and S331-S335 are also performed to determine whether to generate a key code input according to the third touch event. In steps S313 and S314 of the embodiment, the electronic device is configured to calculate the third touch area 43 corresponding to the third touch event, and then categorize the third touch event as a finger-touch event according to the third touch area 43. In steps S315 and S316, the electronic device is configured to calculate a distance between the second touch area 42 and the third touch area 43, and determine that the distance is shorter than the predetermined distance. Therefore, step S300 is performed to skip the third touch event and not generate a key code input.

Above determinations and steps are contributive to input control of a software keyboard. It is not necessary to perform all on the software keyboard. For different purposes, some of above determinations and steps can be selected to fit in with habits of a user. It will be apparent to those skilled in the art that various modifications and variations can be made in the invention. It is intended that the standard and examples be considered as exemplary only, with the true scope of the disclosed embodiments being indicated by the following claims and their equivalents.

## Claims

1. An input control method for a software keyboard and an electronic device comprising a multi-touch screen, comprising:
displaying the software keyboard on the multi-touch screen;
receiving and recording first touch information corresponding to a first touch
event on the software keyboard, wherein the first touch information comprises first touch position information, first touch time information, and first touch range information during the time period from the beginning, touch down, to the ending, touch up, of the first touch event;
receiving and recording second touch information corresponding to a second
touch event on the software keyboard, wherein the second touch information comprises second touch position information, second touch time information, and second touch range information during the time period from the beginning, touch down, to the end, touch up, of the second touch event;
calculating a first touch area corresponding to the first touch event according
to the touch range information of the first touch information;
calculating a second touch area corresponding to the second touch event
according to the touch range information of the second touch information;
determining whether the first touch event is a finger-touch event or a non-finger-touch event according to the touch area;
skipping the first touch event and not generating a key code input if the first
touch event is a non-finger-touch event;
calculating a distance between the first and second touch areas according to
the first and second touch position information if the first touch event is a finger-touch event;
skipping the first touch event and not generating the key code input if the
distance between the first and second touch areas is shorter than or equal to a predetermined distance; and
generating the key code input if the distance between the first and second
touch areas is longer than the predetermined distance.

2. The input control method as in claim 1, wherein the finger-touch event comprises a thumb-touch event and a non-thumb-touch event, and a thumb-touch area corresponding to the thumb-touch event is larger than a non-thumb-touch area corresponding to the non-thumb-touch event.

3. The input control method as in claim 1, wherein the distance between the first and second touch areas is the shortest distance between the edge of the first touch area and the edge of the second touch area.

4. The input control method as in claim 1, further comprising:
starting a timer to measure the time period from the beginning to the ending of
the first touch event if the first touch event is a finger-touch event and the distance between the first and second touch areas is longer than the predetermined distance;
skipping the first touch event and not generating the key code input if the time
period from the beginning to the ending of the first touch event is longer than a predetermined time period; and
generating the key code input if the time period from the beginning to the
ending of the first touch event is shorter than or equal to the predetermined time period.

5. The input control method as in claim 1, further comprising:
determining whether the initial touch position information corresponding to
the beginning of the first touch event is the same as the final touch position information corresponding to the ending of the first touch event if the first touch event is a finger-touch event and the distance between the first and second touch areas is longer than the predetermined distance;
skipping the first touch event and not generating the key code input if the
initial touch position information corresponding to the beginning of the first touch event is different from the final touch position information corresponding to the ending of the first touch event; and
generating the key code input if the initial touch position information
corresponding to the beginning of the first touch event is the same as the final touch position information corresponding to the ending of the first touch event.

6. The input control method as in claim 5, wherein determining whether the initial touch position information corresponding to the beginning of the first touch event is the same as the final touch position information corresponding to the ending of the first touch event is according to whether the initial and final touch position information points to the same key of the software keyboard on the multi-touch screen.

7. The input control method as in claim 1, further comprising:
recording the first touch position information periodically in intervals, for a
predetermined time, during the time period from the beginning to the ending of the first touch event; and
saving the recording time as the first touch time information.

8. An electronic device for a software keyboard, comprising:
a multi-touch screen, having a display area to display the software keyboard;
a processor, configured to:
receive and record first touch information corresponding to a first
touch event on the software keyboard, wherein the first touch information comprises first touch position information, first touch time information, and first touch range information during the time period from the beginning, touch down, to the end, touch up, of the first touch event;
receive and record second touch information corresponding to a second
touch event on the software keyboard, wherein the second touch information comprises second touch position information, second touch time information, and second touch range information during the time period from the beginning, touch down, to the end, touch up, of the second touch event;
calculate a first touch area corresponding to the first touch event
according to the touch range information of the first touch information;
calculate a second touch area corresponding to the second touch event
according to the touch range information of the second touch information;
determine whether the first touch event is a finger-touch event or a
non-finger-touch event according to the touch area;
skip the first touch event and not generate a key code input if the first
touch event is a non-finger-touch event;
calculate a distance between the first and second touch areas according
to the first and second touch position information if the first touch event is a finger-touch event;
skip the first touch event and not generate the key code input if the
distance between the first and second touch areas is shorter than or equal to a predetermined distance; and
generate the key code input if the distance between the first and second
touch areas is longer than the predetermined distance.

9. The electronic device as in claim 8, wherein the finger-touch event comprises a thumb-touch event and a non-thumb-touch event, and a thumb-touch area corresponding to the thumb-touch event is larger than a non-thumb-touch area corresponding to the non-thumb-touch event.

10. The electronic device as in claim 8, wherein the distance between the first and second touch areas is the shortest distance between the edge of the first touch area and the edge of the second touch area.

11. The electronic device as in claim 8, wherein the processor is further configured to:
start a timer to measure the time period from the beginning to the ending of the
first touch event if the first touch event is a finger-touch event and the distance between the first and second touch areas is longer than the predetermined distance;
skip the first touch event and not generate the key code input if the time period
from the beginning to the ending of the first touch event is longer than a predetermined time period; and
generate the key code input if the time period from the beginning to the ending
of the first touch event is shorter than or equal to the predetermined time period.

12. The electronic device as in claim 8, wherein the processor is further configured to:
determine whether the initial touch position information corresponding to the
beginning of the first touch event is the same as the final touch position information corresponding to the ending of the first touch event if the first touch event is a finger-touch event and the distance between the first and second touch areas is longer than the predetermined distance;
skip the first touch event and not generate the key code input if the initial
touch position information corresponding to the beginning of the first touch event is different from the final touch position information corresponding to the ending of the first touch event; and
generate the key code input if the initial touch position information
corresponding to the beginning of the first touch event is the same as the final touch position information corresponding to the ending of the first touch event.

13. The electronic device as in claim 12, wherein the processor is configured to determine whether the initial touch position information corresponding to the beginning of the first touch event is the same as the final touch position information corresponding to the ending of the first touch event according to whether the initial and final touch position information points to the same key of the software keyboard on the multi-touch screen.

14. The electronic device as in claim 8, wherein the processor is further configured to:
record the first touch position information periodically in intervals, for a
predetermined time, during the time period from the beginning to the ending of the first touch event; and
save a recording time as the first touch time information.
